# EUROPÄISCHE PATENTSCHRIFT

(11) **EP 3 551 856 B1**
(45) Veröffentlichungstag und Bekanntmachung des Hinweises auf die Patenterteilung: **04.11.2020**
(21) Anmeldenummer: 17825137.7
(22) Anmeldetag: 07.12.2017
(51) Int. Cl.: F01N 3/10, F01N 13/00, F01N 3/035

(54) **VERFAHREN ZUM DURCHFÜHREN VON DIAGNOSEN EINES ABGASSYSTEMS EINES VERBRENNUNGSMOTORS**
METHOD FOR PERFORMING DIAGNOSES OF AN EXHAUST GAS SYSTEM OF AN INTERNAL COMBUSTION ENGINE
PROCÉDÉ POUR RÉALISER DES DIAGNOSTICS SUR UN SYSTÈME D'ÉCHAPPEMENT D'UN MOTEUR À COMBUSTION INTERNE

(30) Priorität: 12.12.2016 DE 102016224668
(43) Veröffentlichungstag der Anmeldung: 16.10.2019
(73) Patentinhaber: Robert Bosch GmbH, 70442 Stuttgart (DE)
(72) Erfinder: KNOPP, Martin, 71706 Markgroeningen (DE); BILAC, Miroslav, 70597 Stuttgart (DE); MEIER, Frank, 70563 Stuttgart (DE)
(86) Internationale Anmeldenummer: PCT/EP2017/081781
(87) Internationale Veröffentlichungsnummer: WO 2018/108684

(56) Entgegenhaltungen:
- WO-A1-2017/063987
- WO-A1-2017/216440
- US-A1- 2011 219 746
- US-A1- 2012 031 072

## Beschreibung

### Stand der Technik

Die vorliegende Erfindung betrifft ein Verfahren zum Durchführen von Diagnosen eines Abgassystems eines Verbrennungsmotors sowie ein zum Durchführen solcher Diagnosen eingerichtetes Steuergerät. Ein solches Verfahren und ein solches Steuergerät sind zum Beispiel aus der DE 10 2013 201 228 A1, der US 2011/219746 A1 oder der US 2012/031072 A1 bekannt.

Aufgrund immer strenger werdender Anforderungen an die sogenannten tail pipe Emissionen von Kraftfahrzeugen ist auch bei Otto-Kraftstoffmotoren mit der Einführung von Partikelfiltern zur Abgasreinigung zu rechnen. Unter einem Otto-Kraftstoff wird dabei zum Beispiel Benzin, LPG, CNG, Ethanol und Mischungen daraus verstanden. Bisher bereits verwendete Drei-Wege-Katalysatoren werden dabei bevorzugt in Partikelfilter integriert, indem zum Beispiel deren Filterstrukturen mit einem Katalysatormaterial beschichtet werden.

Bei einer solchen Integration von Partikelfilter und Drei-Wege-Katalysator muss die Funktionsfähigkeit der verschiedenen Komponenten wie es auch jetzt schon für separate abgasrelevante Bauteile üblich ist, mit on board Diagnosesystemen überprüft werden. Separate Drei-Wege-Katalysatoren werden durch Bestimmung ihrer Sauerstoffspeicherkapazität überprüft. Noch gute Drei-Wege-Katalysatoren besitzen eine höhere Sauerstoffspeicherkapazität als in Folge von Alterungsprozessen bereits schlechte Drei-Wege-Katalysatoren. Ein Verfahren zur Bestimmung der Sauerstoffspeicherkapazität ist zum Beispiel aus der eingangs genannten DE 10 2013 201 228 A1 bekannt.

Bei Versuchen zur Bestimmung der Sauerstoffspeicherkapazitäten von Vier-Wege-Katalysatoren hat sich gezeigt, dass ein verbreitetes, bekanntes on board Diagnose Verfahren zum Teil zu hohe Werte für die Sauerstoffspeicherkapazität ergab. Bei dem bekannten Verfahren wird der Verbrennungsmotor zunächst mit fettem Gemisch betrieben, um im Katalysator gespeicherten Sauerstoff vollständig aufzubrauchen. Dieser Verfahrensabschnitt wird auch als Ausräumen bezeichnet. Anschließend erfolgt ein Betrieb mit magerem Gemisch, bei dem die Speicherplätze des Katalysators vollständig mit Sauerstoff besetzt werden, was auch als Füllen bezeichnet wird.

### Offenbarung der Erfindung

Die vorliegende Erfindung unterscheidet sich von dem bekannten Verfahren durch die kennzeichnenden Merkmale des Anspruchs 1 und von dem bekannten Steuergerät durch die kennzeichnenden Merkmale des unabhängigen Vorrichtungsanspruchs.

Diese Merkmale sehen vor, dass zum Überprüfen der Funktionsfähigkeit eines vom Abgas des Verbrennungsmotors durchströmten Vier-Wege-Katalysators eine Sauerstoffspeicherkapazität des Vier-Wege-Katalysators ermittelt wird und die Funktionsfähigkeit in Abhängigkeit von der ermittelten Sauerstoffspeicherkapazität beurteilt wird, wobei eine Beladung des Vier-Wege-Katalysators mit Ruß ermittelt und bei der Ermittlung der Sauerstoffspeicherkapazität berücksichtigt wird. Das erfindungsgemäße Steuergerät ist dazu eingerichtet, den Ablauf dieses Verfahrens zu steuern und das Verfahren damit durchzuführen.

Diese technische Lehre basiert auf der Erkenntnis, dass eine hohe Rußbeladung in Verbindung mit einer hohen Abgastemperatur und einem bei der Bestimmung der Sauerstoffspeicherkapazität herrschenden Sauerstoffüberschuss im Abgas zu einer Zündung und Verbrennung der Rußbeladung führen kann. Das Verbrauchen von Sauerstoff bei der Verbrennung des Rußes führt dazu, dass eine stromabwärts des Vier-Wege-Katalysators angeordnete Abgassonde verzögert auf die Einstellung von Luftüberschuss am Eingang des Vier-Wege-Katalysators reagiert. Unter sonst gleichen Bedingungen erfolgt die Reaktion dann, wenn Ruß verbrannt wird, später, als wenn kein Ruß verbrannt wird. Dies könnte dazu führen, dass ein defekter Vier-Wege-Katalysator, der nur noch eine unzureichende Sauerstoffspeicherkapazität besitzt, von der on board Diagnose nicht erkannt wird, so dass die gesetzlichen Forderungen nicht erfüllt wären.

Durch die Erfindung wird der Einfluss einer Verbrennung von Ruß auf die ermittelte Sauerstoffspeicherkapazität quantifiziert und bei der Ermittlung der Sauerstoffspeicherkapazität von einem insgesamt ermittelten Sauerstoffverbrauch subtrahiert. Eine Verfälschung des Ergebnisses einer Sauerstoffspeicherkapazitätsermittlung eines Vier-Wege-Katalysators wird dadurch wirksam vermieden. Dadurch kann die Bestimmung der Sauerstoffspeicherkapazität des Vier-Wege-Katalysators ausreichend genau erfolgen.

Eine bevorzugte Ausgestaltung zeichnet sich dadurch aus, dass der Verbrennungsmotor zunächst in einer Konditionierungsphase mit einer Luftzahl kleiner als 1 betrieben wird, so dass sein Sauerstoffspeicher geleert wird und dass der Verbrennungsmotor anschließend in einer Füllungsphase mit Luftzahlen größer als Eins betrieben wird, so dass der Katalysator mit Sauerstoff befüllt wird und im Vier-Wege-Katalysator gespeicherter Ruß verbrannt wird, dass eine zur in der Füllungsphase erfolgenden Verbrennung des gespeicherten Rußes erforderliche Sauerstoffmenge berechnet wird und dass die Sauerstoffspeicherkapazität aus der in der Füllungsphase in den Vier-Wege-Katalysator eingeströmten Sauerstoffmenge und der zur in der Füllungsphase erfolgenden Verbrennung des gespeicherten Rußes erforderlichen Sauerstoffmenge bestimmt wird.

Die Luftzahl ist bekanntlich ein Maß für das Kraftstoff/Luft-Verhältnis, mit dem der Verbrennungsmotor betrieben wird. Gemessen an einem stöchiometrischen Kraftstoff/Luft-Verhältnis (Luftzahl λ = 1) sind Luftzahlen kleiner als 1 mit einem Kraftstoffüberschuss und Luftzahlen größer als 1 mit einem Luftüberschuss und damit auch einem Sauerstoffüberschuss verbunden. Durch die Konditionierung werden reproduzierbare Testbedingungen erzeugt, so dass die anschließende Füllungsphase zu zuverlässigen Ergebnissen führt.

Bevorzugt ist auch, dass der Verbrennungsmotor zunächst in der Konditionierungsphase betrieben wird, bis eine unmittelbar stromabwärts des Vier-Wege-Katalysators angeordnete und dem Abgas ausgesetzte hintere Abgassonde einen Sauerstoffmangel detektiert, und dass die anschließende Füllungsphase solange aufrechterhalten wird, bis die stromabwärts des Vier-Wege-Katalysators angeordnete hintere Abgassonde einen Sauerstoffüberschuss detektiert und dass der während der Füllungsphase in den Vier-Wege-Katalysator eingeströmte Sauerstoff unter Verwendung des Signals einer stromaufwärts des Vier-Wege-Katalysators angeordneten und dem Abgas ausgesetzten vorderen Abgassonde bestimmt wird.

Bevorzugt ist auch, dass der Betrieb mit einer Luftzahl kleiner als 1 solange aufrecht erhalten wird, bis ein aufsummierter Sauerstoffmangeleintrag in den Vier-Wege-Katalysator einen vorbestimmten Schwellenwert überschreitet.

Weiter ist bevorzugt, dass die ermittelte Sauerstoffspeicherkapazität mit einem Speicherkapazitätsschwellenwert verglichen wird und dass der Vier-Wege-Katalysator als gut beurteilt wird, wenn die ermittelte Sauerstoffspeicherkapazität größer als der Speicherkapazitätsschwellenwert ist.

Bevorzugt ist auch, dass die Ermittlungen der Sauerstoffspeicherkapazitäten und die Fahrzyklen über eine Vielzahl von Fahrzyklen hinweg gezählt werden und dass die Zahl der Ermittlungen der Sauerstoffspeicherkapazität durch die Zahl der Fahrzyklen dividiert wird und dass der Quotient mit einem Häufigkeitsschwellenwert verglichen wird und dass dann, wenn der Quotient kleiner als der Häufigkeitsschwellenwert ist, der Verbrennungsmotor in einer Regenerationsphase vorübergehend nach Möglichkeit mit Luftzahlen größer als 1 und Abgastemperaturen betrieben wird, bei denen im Vier-Wege-Katalysator gespeicherter Ruß verbrennt.

Eine weitere bevorzugte Ausgestaltung zeichnet sich dadurch aus, dass der Verbrennungsmotor in der Regenerationsphase mit im Vergleich zu einem optimalen Wirkungsgrad geringeren Wirkungsgrad betrieben wird. Dadurch wird die Abgastemperatur erhöht, was für die dann erwünschte Verbrennung des Rußes günstig.

Mit Blick auf Vorrichtungsaspekte ist bevorzugt, dass das Steuergerät dazu eingerichtet, insbesondere dazu programmiert ist, den Ablauf von wenigstens einer dieser Ausgestaltungen des Verfahrens zu steuern und die jeweilige Ausgestaltung des Verfahrens damit durchzuführen.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: einen Verbrennungsmotor mit einem Vier-Wege-Katalysator; und
- Figur 2: ein Flussdiagramm als Ausführungsbeispiel eines erfindungsgemäßen Verfahrens.

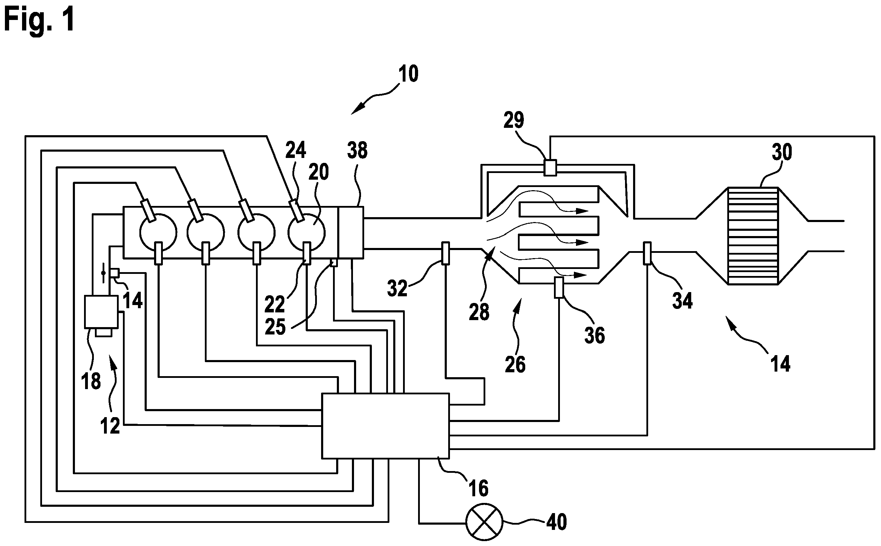

Im Einzelnen zeigt die Figur 1 einen Verbrennungsmotor 10 mit einem Luftzufuhrsystem 12, einem Abgassystem 14 und einem Steuergerät 16. Im Luftzufuhrsystem 12 befindet sich ein Luftmassenmesser 18 und eine stromabwärts des Luftmassenmessers 18 angeordnete Drosselklappe 19. Die über das Luftzufuhrsystem 12 in den Verbrennungsmotor 10 strömende Luft wird in Brennräumen 20 des Verbrennungsmotors 10 mit Otto-Kraftstoff gemischt, das über Einspritzventile 22 direkt in die Brennräume 20 eingespritzt wird. Die resultierenden Brennraumfüllungen werden mit Zündvorrichtungen 24, beispielsweise Zündkerzen, gezündet und verbrannt. Ein Drehwinkelsensor 25 erfasst den Drehwinkel einer Welle des Verbrennungsmotors 10 und erlaubt dem Steuergerät 16 dadurch eine Auslösung der Zündungen in vorbestimmten Winkelpositionen der Welle. Das aus den Verbrennungen resultierende Abgas wird durch das Abgassystem 14 abgeleitet.

Das Abgassystem 14 weist einen Vier-Wege-Katalysator 26 auf. Der Vier-Wege-Katalysator 26 ist im dargestellten Beispiel ein Partikelfilter, der eine innere Wabenstruktur aus porösem Filtermaterial besitzt, das vom Abgas 28 durchströmt wird und das im Abgas 28 enthaltene Partikel zurückhält. Das Filtermaterial ist im dargestellten Beispiel katalytisch beschichtet, so dass es zusätzlich zu seiner Partikelfilterwirkung noch die Wirkung eines Drei-Wege-Katalysators besitzt. Der Dreiwege-Katalysator konvertiert bekanntlich auf drei Reaktionswegen die drei Abgasbestandteile Stickoxide, Kohlenwasserstoffe und Kohlenmonoxid. Die Partikelfilterwirkung stellt einen vierten Weg dar, was die Bezeichnung als Vier-Wege-Katalysator begründet.

Die Beladung des Vier-Wege-Katalysators 26 mit Partikeln erhöht dessen Strömungswiderstand für das Abgas 28 und damit einen sich über dem Vier-Wege-Katalysator 26 einstellenden Differenzdruck dp. Der Differenzdruck dp wird im dargestellten Ausführungsbeispiel durch einen Differenzdrucksensor 29 erfasst. Stromabwärts des Vier-Wege-Katalysators 26 ist optional ein zusätzlicher Drei-Wege-Katalysator 30 angeordnet. Stromaufwärts des Vier-Wege-Katalysators 26 ist eine dem Abgas ausgesetzte vordere Abgassonde 32 unmittelbar vor dem Vier-Wege-Katalysator 26 angeordnet. Stromabwärts des Vier-Wege-Katalysators 26 ist eine ebenfalls dem Abgas ausgesetzte hintere Abgassonde 34 unmittelbar nach dem Vier-Wege-Katalysator 26 angeordnet. Die vordere Abgassonde 32 ist bevorzugt eine Breitband-Lambdasonde, die eine Messung der Luftzahl λ über einen breiten Luftzahlbereich hinweg erlaubt. Die hintere Abgassonde 34 ist bevorzugt eine sogenannte Sprung-Lambdasonde, mit der die Luftzahl λ = 1 besonders genau gemessen werden kann, weil sich das Signal dieser Abgassonde dort sprungartig ändert. Vgl. Bosch, Kraftfahrtechnisches Taschenbuch, 23. Auflage, Seite 524.

Im dargestellten Ausführungsbeispiel ist ein dem Abgas ausgesetzter Temperatursensor 36 in thermischem Kontakt mit dem Abgas 28 am Vier-Wege-Katalysator 26 angeordnet, der die Temperatur des Vier-Wege-Katalysators 26 erfasst. Alternativ dazu wird die Temperatur mit einem Rechenmodell aus Betriebsparametern des Verbrennungsmotors berechnet.

Als Option ist der Verbrennungsmotor 10 im dargestellten Ausführungsbeispiel mit einer elektrischen Maschine 38 gekoppelt, die, je nach Ansteuerung durch das Steuergerät 16, ein Antriebsmoment bereitstellt oder ein Bremsmoment aufnimmt. Das Steuergerät verarbeitet die Signale des Luftmassenmessers 18, des Drehwinkelsensors 25, des Differenzdrucksensors 29, der vorderen Abgassonde 32, der hinteren Abgassonde 34 und des Temperatursensors 36 und bildet daraus Ansteuersignale zur Einstellung der Winkelposition der Drosselklappe 18, zur Auslösung von Zündungen durch die Zündvorrichtung 20, zum Einspritzen von Kraftstoff durch die Einspritzventile 22 und zur Steuerung der elektrischen Maschine 38, sofern eine solche vorhanden ist. Alternativ oder ergänzend verarbeitet das Steuergerät 16 auch Signale anderer oder weiterer Sensoren zur Ansteuerung der dargestellten Stellglieder oder auch weiterer oder anderer Stellglieder. Das Steuergerät 16 schaltet zum Beispiel eine Fehlerlampe 40 ein, wenn es eine zu geringe Sauerstoffspeicherkapazität des Vier-Wege-Katalysators 26 feststellt.

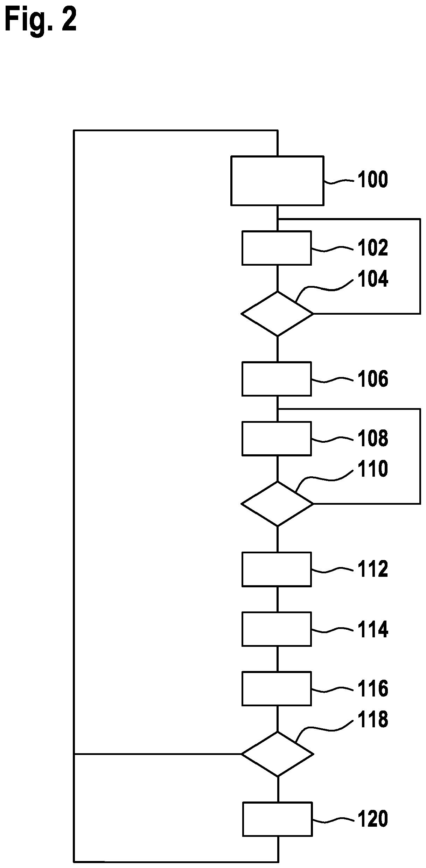

Figur 2 zeigt ein Flussdiagramm als Ausführungsbeispiel eines erfindungsgemäßen Verfahrens. Ein Block 100 repräsentiert ein Hauptprogramm zur Steuerung des Verbrennungsmotors 10, in dem zum Beispiel die Drosselklappe 19, die Zündvorrichtung 20, die Einspritzventile 22 und die elektrische Maschine 38 (sofern vorhanden) so angesteuert werden, dass sich ein gewünschtes Drehmoment ergibt. In Zeitlücken, in denen das Hauptprogramm nicht mit den genannten Funktionen beschäftigt ist, werden die im Folgenden erläuterten Schritte 102 bis 120 durchgeführt. Zunächst wird aus dem Hauptprogramm 100 heraus in vorbestimmter Weise wiederholt ein Schritt 102 erreicht, in dem eine Überprüfung der Funktionsfähigkeit des Vier-Wege-Katalysators 26 ausgelöst wird. Dazu wird im Schritt 102 zunächst eine Konditionierungsphase ausgelöst oder beibehalten. In der Konditionierungsphase wird der Verbrennungsmotor 10 mit Luftzahlen < als 1, also mit Sauerstoffmangel betrieben.

Dies führt dazu, dass im Vier-Wege-Katalysator 26 gespeicherter Sauerstoff an das durchströmende Abgas abgegeben wird, so dass der 4-Wege-Katalysator von Sauerstoff entleert wird. Im Schritt 104 wird zum Beispiel überprüft, ob die stromabwärts angeordnete Abgassonde, die vor der Konditionierungsphase zum Beispiel Luftzahlen λ ≥ 1 angezeigt hatte, eine Luftzahl λ < 1 anzeigt. Solange das nicht der Fall ist, wird die Schleife aus den Schritten 102 und 104 in dieser Ausgestaltung wiederholt durchlaufen. Wenn die hintere Abgassonde dann eine Luftzahl λ < 1 anzeigt, wird die Schleife aus den Schritten 102 und 104 verlassen.

In einer alternativ bevorzugten Ausgestaltung erfolgt der Betrieb mit Sauerstoffmangel (Schritt 102) solange, bis ein aufsummierter Sauerstoffmangeleintrag in den Vier-Wege-Katalysator einen vorbestimmten Schwellenwert überschreitet. Der Schwellenwert ist mindesten so groß wie die Sauerstoffspeicherkapazität eines gerade noch ausreichend guten Vier-Wege-Katalysators. Die Summation erfolgt zum Beispiel durch Integrieren des Produktes der aus dem Signal der vorderen Abgassonde ableitbaren Sauerstoffkonzentration und dem im Steuergerät bekannten Abgasmassenstrom. Der Abgasmassenstrom ergibt sich aus der in den Verbrennungsmotor strömenden Luftmasse und der dazu eingespritzten Kraftstoffmasse. Im Schritt 104 wird in dieser Ausgestaltung überprüft, ob der Wert des Intergrals den Schwellenwert überschreitet.

Wenn der Schwellenwert überschritten wird, wird die Schleife aus den Schritten 102 und 104 verlassen. Es schließt sich ein Schritt 106 an, in dem eine erste Beladung B1 des Vier-Wege-Katalysators mit Ruß ermittelt wird. Der Schritt 106 kann auch vor dem Schritt 102 durchgeführt werden. Die Ermittlung der Rußbeladung B1 erfolgt zum Beispiel dadurch, dass der Strömungswiderstand des Vier-Wege-Katalysators 26 bestimmt wird. Es ist aus der DE 102 48 431 A1 bekannt, als charakteristische Größe für die Beladung B eines Partikelfilters mit Ruß dessen Strömungswiderstand R zu verwenden. Da der Strömungswiderstand R durch die Erfassung des Druckverlustes dp über dem Vier-Wege-Katalysator und durch den Abgasvolumenstrom festgelegt und da der Abgasvolumenstrom im Steuergerät bekannt ist oder aus gemessener Luftmasse und eingespritzter Kraftstoffmasse berechnet werden kann, kann das Steuergerät 16 letztlich auch die Beladung mit Ruß ermitteln. Der Strömungswiderstand ergibt sich daraus, dass der Druckabfall dp über dem Vier-Wege-Katalysator 26, der mit dem Differenzdrucksensor gemessen wird, durch den Abgasvolumenstrom dividiert wird.

Den so ermittelten Strömungswiderstandswerten R werden über eine im Steuergerät 16 abgelegte Kennlinie Beladungswerte B zugeordnet, so dass das Steuergerät 16 die Beladung B letztlich aus im Steuergerät bekannten Größen bestimmen kann. Alternativ dazu wird die Rußbeladung aus einer Bilanz der Ruß-Rohemissionen des Verbrennungsmotors und einer durch ein Rechenmodell ermittelten Menge an verbranntem Ruß ermittelt.

An die Konditionierungsphase, in der sämtlicher Sauerstoff aus dem Vier-Wege-Katalysator ausgeräumt worden ist und die mit dem Verlassen der Schleife aus den Schritten 102 und 104 beendet worden ist, schließt sich eine Füllungsphase an, in der der Verbrennungsmotor mit Luftzahlen λ > 1 und damit mit Sauerstoffüberschuss betrieben wird. Diese Füllungsphase wird im Schritt 106 begonnen oder fortgesetzt. Während der Füllungsphase wird fortlaufend der Sauerstoffeintrag in den Vier-Wege-Katalysator aufsummiert. Der gesamte Sauerstoffeintrag ergibt sich als Integral des Produktes aus dem im Steuergerät 16 bekannten Abgasmassenstrom und der von der stromaufwärts des Vier-Wege-Katalysators angeordneten Abgassonde gemessenen Sauerstoffkonzentration. Unter der Voraussetzung, dass die Temperatur des Vier-Wege-Katalysators oder des Abgases zumindest zu Beginn der Füllungsphase über einer Rußentzündungstemperatur gelegen hat, wird ein Teil des in der Füllungsphase in den Vier-Wege-Katalysator eingetragenen Sauerstoffs zum Verbrennen der Rußbeladung B verbraucht. Ein weiterer Teil wird im Vier-Wege-Katalysator gespeichert. Im Schritt 108 wird überprüft ob die Luftzahl λ stromabwärts des Vier-Wege-Katalysators noch ≤ 1 ist. Solange dies der Fall ist, wird die Schleife aus den Schritten 106 und 108 wiederholt durchlaufen. Die Füllungsphase wird bevorzugt solange beibehalten, bis die stromabwärts des Vier-Wege-Katalysators angeordnete Abgassonde eine Änderung der Luftzahl von Luftzahlen λ ≤ 1 auf Luftzahlen λ ≥ 1 anzeigt. Die dann hinter dem Vier-Wege-Katalysator auftretenden NOx-Emissionen werden durch den stromabwärts des Vier-Wege-Katalysators 26 angeordneten Drei-Wege-Katalysator 30 konvertiert.

Im Ausführungsbeispiel der Figur 2 schließt sich in diesem Fall an den Schritt 108 der Schritt 110 an, in dem die Beladung B des Vier-Wege-Katalysators erneut ermittelt wird. Dies geschieht bevorzugt auf die oben angegebene Art und Weise. Der ermittelte Wert ist eine Beladung B2. Anschließend wird im Schritt 112 die Differenz aus den vor und nach der Füllungsphase ermittelten Beladungen B1 und B2 gebildet. Diese Differenz B1 - B2 entspricht der während der Füllungsphase verbrannten Rußmenge. Alternativ dazu wird die verbrannte Rußmenge durch ein Rechenmodell ermittelt. Dadurch wird auch automatisch ein Einfluss der Temperatur des Vier-Wege-Katalysators auf die Menge an verbranntem Ruß berücksichtigt. Wird die Rußzündtemperatur nicht erreicht, werden sich die Beladungen B1 und B2 nicht oder nur wenig unterscheiden. Der durch die Differenzbildung quantifizierten Rußmenge lässt sich durch stöchiometrische Berechnungen die Sauerstoffmenge O_Ruß zuordnen, die für die Verbrennung der Rußmenge erforderlich war. Dies erfolgt im Schritt 114.

Im Schritt 116 wird die zur Verbrennung der Rußmenge verbrauchte Sauerstoffmenge O_Ruß von der insgesamt während der Füllungsphase in den Vier-Wege-Katalysator eingetragenen Sauerstoffmenge O_1 subtrahiert. Das Ergebnis ist die tatsächlich im Vier-Wege-Katalysator gespeicherte Sauerstoffmenge O_26. Im Schritt 118 wird diese gespeicherte Sauerstoffmenge O_26 mit einem Schwellenwert SW verglichen, der noch ausreichend große Sauerstoffspeicherkapazitäten O_26 von nicht mehr ausreichend großen Sauerstoffspeicherkapazitäten O_26 trennt.

Wenn die ermittelte Sauerstoffspeicherkapazität O_26 größer als der Schwellenwert, wird gleich das Hauptprogramm 100 fortgesetzt. Ist die ermittelte Sauerstoffspeicherkapazität O_26 dagegen nicht mehr ausreichend groß, wird der Vier-Wege-Katalysator 26 im Schritt 120 als nicht mehr funktionsfähig beurteilt, und es wird ein Fehlersignal ausgegeben und gespeichert. Mit dem Fehlersignal wird, ggf. nach statistischer Absicherung durch wiederholte Ermittlungen der Sauerstoffspeicherkapazität O_26, die Fehlerlampe 40 eingeschaltet. Anschließend erfolgt auch hier ein Fortsetzen des Hauptprogramms 100.

## Patentansprüche

1. Verfahren zum Betreiben eines mit Otto-Kraftstoff betreibbaren Verbrennungsmotors (10), **dadurch gekennzeichnet, dass** zum Überprüfen der Funktionsfähigkeit eines vom Abgas (28) des Verbrennungsmotors (10) durchströmten Vier-Wege-Katalysators (26) eine Sauerstoffspeicherkapazität des Vier-Wege-Katalysators (26) ermittelt wird und die Funktionsfähigkeit in Abhängigkeit von der ermittelten Sauerstoffspeicherkapazität beurteilt wird, wobei eine Beladung des Vier-Wege-Katalysators (26) mit Ruß ermittelt und bei der Ermittlung der Sauerstoffspeicherkapazität berücksichtigt wird.

2. Verfahren nach Anspruch 1, **dadurch gekennzeichnet, dass** der Verbrennungsmotor (10) zunächst in einer Konditionierungsphase mit einer Luftzahl kleiner als 1 betrieben wird, so dass sein Sauerstoffspeicher geleert wird und dass der Verbrennungsmotor (10) anschließend in einer Füllungsphase mit Luftzahlen größer als Eins betrieben wird, so dass der Vier-Wege-Katalysator (26) mit Sauerstoff befüllt wird und im Vier-Wege-Katalysator (26) gespeicherter Ruß verbrannt wird, dass eine zur in der Füllungsphase erfolgenden Verbrennung des gespeicherten Rußes erforderliche Sauerstoffmenge berechnet wird und dass die Sauerstoffspeicherkapazität aus der in der Füllungsphase in den Vier-Wege-Katalysator (26) eingeströmten Sauerstoffmenge und der zur in der Füllungsphase erfolgenden Verbrennung des gespeicherten Rußes erforderlichen Sauerstoffmenge bestimmt wird.

3. Verfahren nach Anspruch 2, **dadurch gekennzeichnet, dass** der Verbrennungsmotor (10) zunächst in der Konditionierungsphase betrieben wird, bis eine unmittelbar stromabwärts des Vier-Wege-Katalysators (26) angeordnete und dem Abgas ausgesetzte hintere Abgassonde (34) einen Sauerstoffmangel detektiert, und dass die anschließende Füllungsphase solange aufrechterhalten wird, bis die stromabwärts des Vier-Wege-Katalysators angeordnete hintere Abgassonde (34) einen Sauerstoffüberschuss detektiert und dass der während der Füllungsphase in den Vier-Wege-Katalysator (26) eingeströmte Sauerstoff unter Verwendung des Signals einer stromaufwärts des Vier-Wege-Katalysators (26) angeordneten und dem Abgas (28) ausgesetzten vorderen Abgassonde ( 32) bestimmt wird.

4. Verfahren nach Anspruch 2, **dadurch gekennzeichnet, dass** der Betrieb mit einer Luftzahl kleiner als 1 solange aufrecht erhalten wird, bis ein aufsummierter Sauerstoffmangeleintrag in den Vier-Wege-Katalysator einen vorbestimmten Schwellenwert überschreitet.

5. Verfahren nach einem der vorhergehenden Ansprüche, **dadurch gekennzeichnet, dass** die ermittelte Sauerstoffspeicherkapazität mit einem Speicherkapazitätsschwellenwert verglichen und dass der Vier-Wege-Katalysator (26) als gut beurteilt wird, wenn die ermittelte Sauerstoffspeicherkapazität größer als der Speicherkapazitätsschwellenwert ist.

6. Verfahren nach einem der vorhergehenden Ansprüche, **dadurch gekennzeichnet, dass** die Ermittlungen der Sauerstoffspeicherkapazitäten und die Fahrzyklen über eine Vielzahl von Fahrzyklen hinweg gezählt werden und dass die Zahl der Ermittlungen der Sauerstoffspeicherkapazität durch die Zahl der Fahrzyklen dividiert wird und dass der Quotient mit einem Häufigkeitsschwellenwert verglichen wird und dass dann, wenn der Quotient kleiner als der Häufigkeitsschwellenwert ist, der Verbrennungsmotor (10) in einer Regenerationsphase vorübergehend nach Möglichkeit mit Luftzahlen größer als 1 und Abgastemperaturen betrieben wird, bei denen im Vier-Wege-Katalysator (26) gespeicherter Ruß verbrennt.

7. Verfahren nach Anspruch 5, **dadurch gekennzeichnet, dass** der Verbrennungsmotor in der Regenerationsphase mit im Vergleich zu einem optimalen Wirkungsgrad geringeren Wirkungsgrad betrieben wird.

8. Verfahren nach einem der vorhergehenden Ansprüche, **dadurch gekennzeichnet, dass** die Beladung des Vier-Wege-Katalysators (26) mit Ruß durch eine Bestimmung des Strömungswiderstands des Vier-Wege-Katalysators (26) und/oder durch ein Rußbeladungsmodell erfolgt.

9. Steuergerät (16), das zum Betreiben eines mit Otto-Kraftstoff betreibbaren Verbrennungsmotors (10) eingerichtet ist, **dadurch gekennzeichnet, dass** das Steuergerät (16) dazu eingerichtet ist, zum Überprüfen der Funktionsfähigkeit eines vom Abgas eines Verbrennungsmotors (10) durchströmten Vier-Wege-Katalysators (26) eine Sauerstoffspeicherkapazität des Vier-Wege-Katalysators (26) zu ermitteln und die Funktionsfähigkeit in Abhängigkeit von der ermittelten Sauerstoffspeicherkapazität zu beurteilen, und dabei eine Beladung des Vier-Wege-Katalysators (26) mit Ruß zu ermitteln und bei der Ermittlung der Sauerstoffspeicherkapazität zu berücksichtigen.

10. Steuergerät (16) nach Anspruch 8, **dadurch gekennzeichnet, dass** es dazu eingerichtet ist, einen Ablauf eines Verfahren nach einem der Ansprüche 2 bis 7 zu steuern.

## Claims

1. Method for operating an internal combustion engine (10) which is operable with gasoline fuel, **characterized in that**, to check the functionality of a four-way catalytic converter (26) which is flowed through by the exhaust gas (28) of the internal combustion engine (10), an oxygen storage capacity of the four-way catalytic converter (26) is ascertained, and the functionality is assessed in a manner dependent on the ascertained oxygen storage capacity, wherein a loading of the four-way catalytic converter (26) with soot is ascertained and taken into consideration in the ascertainment of the oxygen storage capacity.

2. Method according to Claim 1, **characterized in that** the internal combustion engine (10) is firstly operated in a conditioning phase with an air ratio of less than 1, such that the oxygen store thereof is emptied, and **in that** the internal combustion engine (10) is subsequently operated in a filling phase with air ratios greater than one, such that the four-way catalytic converter (26) is filled with oxygen and soot stored in the four-way catalytic converter (26) is burned, **in that** an oxygen quantity required for the burning of the stored soot that takes place in the filling phase is calculated, and **in that** the oxygen storage capacity is determined from the oxygen quantity that has flowed into the four-way catalytic converter (26) in the filling phase and from the oxygen quantity required for the burning of the stored soot that takes place in the filling phase.

3. Method according to Claim 2, **characterized in that** the internal combustion engine (10) is firstly operated in the conditioning phase until a rear exhaust-gas probe (34) which is arranged immediately downstream of the four-way catalytic converter (26) and which is exposed to the exhaust gas detects a deficiency of oxygen, and **in that** the subsequent filling phase is maintained until the rear exhaust-gas probe (34) arranged downstream of the four-way catalytic converter detects an excess of oxygen, and **in that**, during the filling phase, oxygen which has flowed into the four-way catalytic converter (26) is determined using the signal from a front exhaust-gas probe (32) which is arranged upstream of the four-way catalytic converter (26) and which is exposed to the exhaust gas (28).

4. Method according to Claim 2, **characterized in that** the operation with an air ratio of less than 1 is maintained until a cumulative oxygen deficiency introduction into the four-way catalytic converter exceeds a predetermined threshold value.

5. Method according to any of the preceding claims, **characterized in that** the ascertained oxygen storage capacity is compared with a storage capacity threshold value, and **in that** the four-way catalytic converter (26) is assessed as good if the ascertained oxygen storage capacity is greater than the storage capacity threshold value.

6. Method according to any of the preceding claims, **characterized in that** the ascertainments of the oxygen storage capacities and the driving cycles are counted over a multiplicity of driving cycles, and **in that** the number of ascertainments of the oxygen storage capacity is divided by the number of driving cycles, and **in that** the quotient is compared with a frequency threshold value, and **in that**, if the quotient is lower than the frequency threshold value, the internal combustion engine (10) is, in a regeneration phase, temporarily operated where possible with air ratios greater than 1 and exhaust-gas temperatures with which soot stored in the four-way catalytic converter (26) is burned.

7. Method according to Claim 5, **characterized in that** the internal combustion engine is, in the regeneration phase, operated with an efficiency lower than an optimum efficiency.

8. Method according to any of the preceding claims, **characterized in that** the loading of the four-way catalytic converter (26) with soot is performed by means of a determination of the flow resistance of the four-way catalytic converter (26) and/or by means of a soot loading model.

9. Control unit (16) which is configured for operating an internal combustion engine (10) which is operable with gasoline fuel, **characterized in that**, to check the functionality of a four-way catalytic converter (26) which is flowed through by the exhaust gas (28) of the internal combustion engine (10), the control unit (16) is configured to ascertain an oxygen storage capacity of the four-way catalytic converter (26) and to assess the functionality in a manner dependent on the ascertained oxygen storage capacity, and in so doing ascertain a loading of the four-way catalytic converter (26) with soot and take this into consideration in the ascertainment of the oxygen storage capacity.

10. Control unit (16) according to Claim 8, **characterized in that** said control unit is configured to control an execution of a method according to any of Claims 2 to 7.

## Revendications

1. Procédé pour faire fonctionner un moteur à combustion interne (10) pouvant fonctionner à l'essence, **caractérisé en ce qu'**une capacité de stockage d'oxygène du catalyseur à quatre voies (26) est déterminée pour vérifier la capacité de fonctionnement d'un catalyseur à quatre voies (26) traversé par les gaz d'échappement (28) du moteur à combustion interne (10), et la capacité de fonctionnement est évaluée en fonction de la capacité de stockage d'oxygène déterminée, dans lequel une charge en suie du catalyseur à quatre voies (26) est déterminée et prise en compte lors de la détermination de la capacité de stockage d'oxygène.

2. Procédé selon la revendication 1, **caractérisé en ce que** le moteur à combustion interne (10) fonctionne d'abord dans une phase de conditionnement avec un facteur d'air inférieur à 1 de sorte que son stockage en oxygène est vidé, et **en ce que** le moteur à combustion interne (10) fonctionne ensuite dans une phase de remplissage avec des facteurs d'air supérieurs à un de sorte que le catalyseur à quatre voies (26) est rempli d'oxygène et la suie stockée dans le catalyseur à quatre voies (26) est brûlée, **en ce qu'**une quantité d'oxygène nécessaire à la combustion de la suie stockée, effectuée dans la phase de remplissage, est calculée, et **en ce que** la capacité de stockage d'oxygène est déterminée à partir de la quantité d'oxygène introduite dans le catalyseur à quatre voies (26) dans la phase de remplissage et à partir de la quantité d'oxygène nécessaire à la combustion de la suie stockée, effectuée dans la phase de remplissage.

3. Procédé selon la revendication 2, **caractérisé en ce que** le moteur à combustion interne (10) fonctionne d'abord dans la phase de conditionnement jusqu'à ce qu'une sonde de gaz d'échappement arrière (34), disposée directement en aval du catalyseur à quatre voies (26) et exposée aux gaz d'échappement détecte un manque d'oxygène, et **en ce que** la phase de remplissage consécutive est maintenue jusqu'à ce que la sonde de gaz d'échappement arrière (34) disposée en aval du catalyseur à quatre voies détecte un excédent d'oxygène, et **en ce que** l'oxygène introduit dans le catalyseur à quatre voies (26) pendant la phase de remplissage est déterminé en utilisant le signal d'une sonde de gaz d'échappement avant (32) disposée en amont du catalyseur à quatre voies (26) et exposée aux gaz d'échappement (28).

4. Procédé selon la revendication 2, **caractérisé en ce que** le fonctionnement avec un facteur d'air inférieur à 1 est maintenu jusqu'à ce qu'une entrée de manque d'oxygène additionnée dans le catalyseur à quatre voies dépasse une valeur seuil prédéterminée.

5. Procédé selon l'une quelconque des revendications précédentes, **caractérisé en ce que** la capacité de stockage d'oxygène déterminée est comparée à une valeur seuil de capacité de stockage, et **en ce que** le catalyseur à quatre voies (26) est évalué comme étant correct si la capacité de stockage d'oxygène déterminée est supérieure à la valeur seuil de capacité de stockage.

6. Procédé selon l'une quelconque des revendications précédentes, **caractérisé en ce que** les déterminations des capacités de stockage d'oxygène et les cycles de conduite sont comptés sur une pluralité de cycles de conduite, et **en ce que** le nombre des déterminations de la capacité de stockage d'oxygène est divisé par le nombre de cycles de conduite, et **en ce que** le quotient est comparé à une valeur seuil de fréquence, et **en ce qu'**ensuite, si le quotient est inférieur à la valeur seuil de fréquence, le moteur à combustion interne (10) fonctionne dans une phase de régénération, si possible provisoirement avec des facteurs d'air supérieurs à 1 et des températures de gaz d'échappement permettant la combustion de la suie stockée dans le catalyseur à quatre voies (26).

7. Procédé selon la revendication 5, **caractérisé en ce que** le moteur à combustion interne fonctionne dans la phase de régénération avec un facteur de rendement inférieur en comparaison avec un facteur de rendement optimal.

8. Procédé selon l'une quelconque des revendications précédentes, **caractérisé en ce que** la charge en suie du catalyseur à quatre voies (26) est effectuée par une détermination de la résistance à l'écoulement du catalyseur à quatre voies (26) et/ou par un modèle de charge en suie.

9. Appareil de commande (16) conçu pour faire fonctionner un moteur à combustion interne (10) pouvant fonctionner à l'essence, **caractérisé en ce que** l'appareil de commande (16) est conçu pour vérifier la capacité de fonctionnement d'un catalyseur à quatre voies (26) traversé par les gaz d'échappement d'un moteur à combustion interne (10), pour déterminer une capacité de stockage d'oxygène du catalyseur à quatre voies (26), et pour évaluer la capacité de fonctionnement en fonction de la capacité de stockage d'oxygène déterminée, et pour déterminer alors une charge en suie du catalyseur à quatre voies (26) et pour tenir compte de la capacité de stockage d'oxygène lors de la détermination.

10. Appareil de commande (16) selon la revendication 8, **caractérisé en ce qu'**il est conçu pour commander un déroulement d'un procédé selon l'une quelconque des revendications 2 à 7.
